# EUROPEAN PATENT SPECIFICATION

(11) **EP 1 670 243 B1**
(45) Date of publication and mention of the grant of the patent: **27.10.2010**
(21) Application number: 04029226.0
(22) Date of filing: 09.12.2004
(51) Int. Cl.: H04N 5/52, H04N 5/46

(54) **Mobile high frequency receiver with quality based input control**
Mobiler Hochfrequenzempfänger mit qualitätsabhängiger Eingangssteuerung
Récepteur mobile haute-fréquence avec commande d'entrée basé sur la qualité

(43) Date of publication of application: 14.06.2006
(73) Proprietor: Harman Becker Automotive Systems GmbH, 76307 Karlsbad (DE)
(72) Inventor: Zahm, Michael, 76337 Waldbronn (DE); Ratzel, Achim, 76307 Karlsbad-Spielberg (DE); Köhler, Stefan, 75210 Keltern (DE)
(74) Representative: Grünecker, Kinkeldey, Stockmair & Schwanhäusser Anwaltssozietät

(56) References cited:
- US-A1- 2002 008 787
- US-A1- 2002 118 313
- US-B1- 6 188 447
- US-B1- 6 353 463

## Description

The present invention relates to a mobile high frequency receiver that can receive both analogue and digital broadcast signals and then process these received analogue and digital signals.

Nowadays more and more TV-receivers are being installed in cars so that the passengers can watch live broadcasts, for instance to keep them up-to-date with worldwide news media. This means that in mobile receivers automatic gain control (AGC) is becoming evermore important to guarantee a good quality reception signal. An AGC circuit automatically controls the gain of an amplifier so that the level of an output signal is constant, although the level of an input signal may vary. Used in a TV-receiver, an AGC circuit automatically controls the RF gain of the RF amplifier employed in a tuner and the intermediate frequency (IF) gain of an IF amplifier connected to the output end of the tuner, and thus maintains the level of a restored video signal constant although the level of a received broadcasting signal varies.

In a parallel development to conventional analogue broadcast TV signals, digital (terrestrial) broadcasting is also becoming more important for a variety of reasons, not least government legislation. Currently, there is not a large choice of digital terrestrial broadcast channels yet, and therefore, it is advantageous if a so called hybrid TV receiver can receive both the analogue and digital signals and process these to achieve a watchable output.

DE 30 10 242 C2 describes a TV-receiver with an amplification circuit for the high frequency stage. An additional circuit gets rid of oversteer that can occur when channels are switched etc. The additional circuit is independent of the normal high frequency amplification and intermediate frequency amplifiers and is not itself affected by the normal control steps. The oversteer is dealt with by lowering only the amplification of the high frequency amplifier without impacting on the IF amplifier.

EP 0 571 790 B1 relates to a TV-receiver with gain control actuated by a microcomputer. An analogue gain control signal is converted into a digital signal that is then compared to a digital reference signal, from which a digital control voltage is derived. This is then again converted into an analogue gain control signal, which is fed to a control input of the controllable input stage which is used to gauge the reception field strength of receivable transmitters and for sorting these receivable transmitters during the automatic programming of the TV-receiver.

US-6 353 463 B1 describes a TV-receiver having an analogue/digital dual tuner which is capable of receiving and selecting an analogue broadcast signal or a digital broadcast signal and contains a controller for automatically controlling the RF gain of the dual tuner. The gain controlled RF signal is converted into an IF signal, which is then distributed from the dual tuner according to the broadcasting mode employed. A switching portion is used for selecting one of the signals according to an applied AGC select signal. The dual tuner controls the gain of the radio frequency signal of the selected channel according to an automatic gain control signal output from the switching portion, and then converts the gain controlled RF signal into an IF signal which can be easily amplified.

US-B1-6 353 463 discloses a TV-receiver with an analog/digital dual tuner (Fig. 2). The dual tuner selects a channel according to the applied channel select control signal, controls the gain of the RF signal of the selected channel according to an applied automatic gain control signal, and converts the gain controlled RF signal into an IF signal. A signal distributor identifies and outputs the IF signal output from the dual tuner according to the selected broadcasting mode, i.e. analog or digital.

US 2002/008787 A1 discloses a television receiving apparatus for analog and digital signals with tuner means for receiving both an analog and digital TV-broadcast signal. A signal is selected and converted into an intermediate frequency signal, after which it is demodulated to a video signal in the analog case, and to a baseband signal in the digital case.

US 2002/118313 A1 discloses a television receiver with a tuner stage, a selective filter stage and an intermediate frequency stage. A field strength signal proportional to the field strength of the received signal is generated.

US-B1-6 188 447 discloses a frequency diversity system for use in mobile reception of television and RF signals. The control and analysis circuit compares the incoming frequencies to the frequency of the signal transmitted by the television receiver to determine the highest quality signal.

As can be seen from the description of the related art above, there is an improvable way of reliably receiving and processing both analogue and digital broadcast signals in a mobile high frequency receiver.

When high signal levels are received the input stage has to be protected from too high a level and the received signal has to be protected from interference originating from RF frequencies of other channels. Conventionally, control of the input stage is only based on the field strength of the signals. This means that if the level of the signal is determined in a broadband way, a strong neighboring channel can further weaken an already weak received signal and therefore a worse signal to noise ratio (SNR) results.

Therefore it is an object of the present invention to provide a mobile high frequency receiver and method with an improved control algorithm to enhance the quality of the received analogue or digital signal and to improve the signal to noise ratio in the received signals.

This object is solved by the invention as defined by the independent claims. Preferred embodiments are subject to various dependent claims.

The general idea underlying the invention is to use the quality information of the received signal to control the input stage of the tuner. This ensures that there are no interferences in the frequency band of the reception signal when a very strong signal is present, without having to change the signal to noise ratio.

Therefore, the present invention uses the quality information of the received signal to control the amplifying stage of the signal path in specific situations when the field strength is high. The input stage is followed by both a digital signal processing section and an analogue signal processing section that process the received TV signal and output a first and second quality information signal, respectively. An evaluation unit evaluates these signals and outputs a control signal for the input stage as well as control signals for the signal processing sections.

Preferably, using a broadband level detector for detecting the level of the TV signal has the advantage that it can also input said level towards the evaluation unit for further processing.

According to a preferred embodiment the evaluation unit can further consider the first automatic gain control signal, the second automatic gain control signal and the third automatic gain control signal in its evaluation. This has the advantage that the control signal for the amplifying input stage is based on a variety of signals and therefore its limited dynamic range is optimized.

Preferably, the evaluation unit can output different control signals to the amplifying input stage so the best signal can be selected for the circumstances. These signals include a variable level control signal and a dynamic control signal.

According to an embodiment, the evaluation unit can also output control signals directly to the digital signal processing section or the analogue demodulation section so that these are adjusted and can operate in an efficient manner.

A tunable amplifier at the input of the digital demodulation section has the advantage that the signal is always input to the digital demodulation section at the right level.

According to an embodiment, having a tunable amplifying input stage has the advantage of only needing one tuner for a range of frequencies and not having to employ a different tuner for every required frequency.

Additional features and advantages of the present invention will become apparent from the following description of the invention as illustrated in the drawings, wherein:
- Fig. 1: schematically illustrates a block diagram of the quality based input control circuit, and
- Fig. 2: schematically illustrates a flow diagram for the method employed.

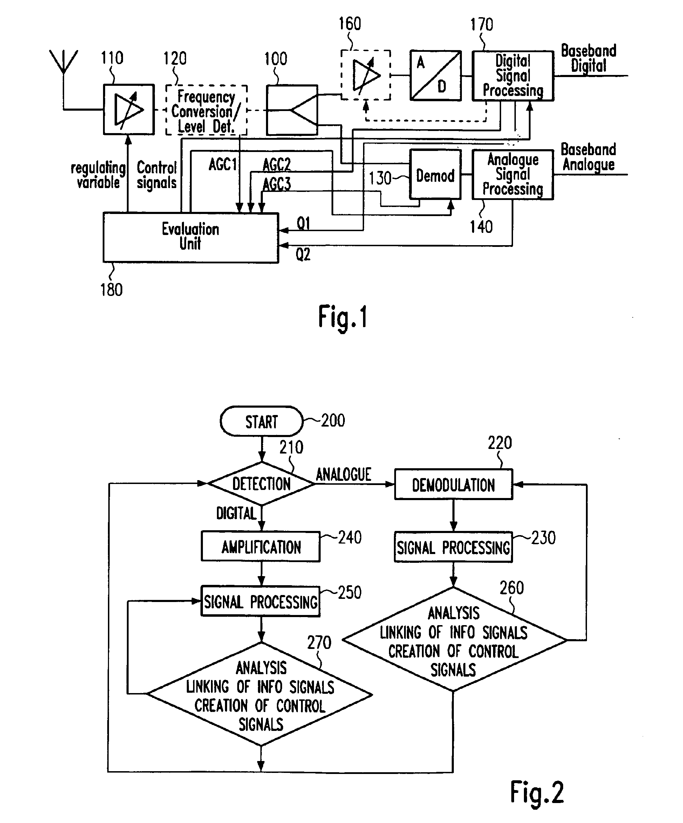

Fig. 1, in block diagram form, shows an example of a mobile receiver. The tuner receives a radio frequency signal in an input stage 110. Alternatively, a tunerless design could be used with an amplifying input stage. The level (amplitude) of the detected TV signal is determined in a broadband level detector 120. The amplitude of the signal needs to be determined so that it can be established whether the reception is good enough for display on the TV screen. Intermediate frequency (IF) signals are outputted from the frequency converter/broadband level detector 120. A switch or splitter 100 switches or spreads out to the analogue and digital demodulation and processing sections, depending on whether the received signal is analogue or digital.

If the signal is an analogue broadcast signal, the IF signals for it are fed through a Surface Acoustic Wave (SAW) filter or any other kind of filter to the analogue demodulation section 130 to reduce any unwanted sidebands in the signal. An automatic gain control signal AGC3 is output to an evaluation unit 180 which is described further below. The IF signal is then further processed in a signal processing section 140 before a picture is displayed for the viewer. The signal processing section 140 also outputs a quality information signal Q 2, which can include information on the SNR, and/or information on adjacent channel disturbances and multi-path interference. This quality information is sent to the evaluation unit 180, which will be further described below.

If the signal is detected to be a digital signal it is output from the tuner and enters a SAW filter or a different type of filter to reduce any unwanted sidebands in the signal before being amplified in a tunable amplifier 160 and demodulated in a digital demodulation section 170. The digital signal processor 170, which may preferably be a Coded Orthogonal Frequency Division Multiplexing (COFDM) demodulator typical for digital TV, but using other standards is also possible, supplies the tuning signal for the tunable amplifier 160. The digital signal processing section 170 outputs a quality information signal Q 1 and an automatic gain control signal AGC2 to the evaluation unit 180. This quality information can include the Bit Error Rate (BER), the Modulation Error Rate (MER), the Carrier-to-Noise Ratio (CNR) and various MPEG (Motion Pictures Experts Group) transportstream errors.

The evaluation unit 180 analyses and links the quality information signals and automatic gain control signals and creates a control signal to regulate the amplifying input stage 110 as well as the analogue demodulator 130 and the digital signal processing section 170.

The circuit described above ensures that any quality information contained in the signal is used to amplify the required broadcast signal at most, if the interference of the neighboring channels or foreign channels can be ignored and the maximally allowed IF-level does not exceed the upper limit.

Another option would be to use software defined radio (or "software radio") in the analogue or digital path of the receiver.

The flow diagram in Fig. 2 describes the operation of the mobile high frequency receiver as set out above. When the receiver, comprising the tuner, the analogue signal processing section 140, the digital signal processing section 170 and the evaluation unit 180, is switched on in step 200 and a signal is selected in step 210, manually or automatically. If it is an analogue signal it is demodulated in the analogue demodulator 130 and signal processed in the signal processor 140 in step 230 before it is further analyzed in step 260. If the signal is a digital signal it is amplified in the digital amplifier 160 in step 240 and signal processed in the digital signal processing section 170 in step 250 before further processing in step 270.

The processing steps 260 and 270 consist of an analysis of the signal, linking of information signals as well as the creation of control signals in the evaluation unit 180. These control signals control the detection stage in step 210. This feedback loop ensures that the used broadcast signal has the best quality, even in situations with strong neighboring channels.

After demodulation step 220 and signal processing step 230 of the analogue signal, the quality information signals and automatic gain control signals are analysed and linked and a control signal for the analogue demodulation is arrived at. This control signal is used to directly control the demodulation step 220 of the analogue signal path.

In the digital signal path the received digital broadcast signal is first amplified in step 240 and then processed in step 250 before being analysed in step 270. Here the quality information signals and automatic gain control signals are also linked to create a control signal for the digital signal processing step 250. Again this is a direct link making it possible to improve the process of digital signal processing.

Before the detection step 210 an additional signal AGC1 is generated, which is input to the evaluating unit 180.

The analysis steps 260 and 270 link a quality information signal output from the analogue signal processor 140, respectively the digital signal processing section, with the automatic gain control signals output by the analogue demodulator 130, the digital signal processing section 170 and the detector 120 create control signals from these. These control signals control the input to the detector 120, as well as the analogue demodulator 130 and the digital signal processing section 170 themselves.

The evaluation unit 180 also receives inputs from the digital signal processing section in the form of an automatic gain control signal AGC2 and from the analogue demodulation section 130 in the form of an automatic gain control signal AGC3. The automatic gain control signals from the level detector 120, the digital signal processing section 170 and the analogue demodulator 130 are evaluated together with the quality information signal from the digital signal processing section 170 and the analogue signal processing section 140 in the evaluation unit 180, which then outputs the control signals.

## Claims

1. A mobile high frequency receiver comprising:
an amplifying input stage (110) for receiving an analogue or digital broadcast signal,
a digital signal processing section (170) for processing a received digital broadcast signal and outputting a first quality information signal (Q 1) indicating the quality of the received digital broadcast signal;
an analogue signal processing section (140) for processing a received analogue broadcast signal and outputting a second quality information signal (Q 2), indicating the quality of the received analogue broadcast signal;
a broadband level detector (120) for detecting an amplitude of the received analogue and digital broadcast signal and outputting a first automatic gain control signal (AGC1) dependent on said amplitude;
an evaluation unit (180) for evaluating at least one of said first and second quality information signal and outputting a control signal based on either the first or second quality information signal and said first automatic gain control signal (AGC1) to regulate the amplification of said amplifying input stage (110).

2. The mobile high frequency receiver according to claim 1 wherein
the digital signal processing section (170) is adapted to output a second automatic gain control signal (AGC2).

3. The mobile high frequency receiver according to claim 1 or 2 further comprising:
an analogue demodulation section (130) for demodulating the analogue broadcast signal and outputting a third automatic gain control signal (AGC3).

4. The mobile high frequency receiver according to claim 2 and 3 wherein the evaluation unit (180) is adapted to further evaluate the second automatic gain control signal (AGC2) and the third automatic gain control signal (AGC3) and output the control signal to regulate said amplifying input stage (110) based on the second or third automatic gain control signal.

5. The mobile high frequency receiver according to any of claims 1 to 4 wherein the control signal output by the evaluation unit (180) to regulate the amplifying input stage (110) is a variable level control signal.

6. The mobile high frequency receiver according to any of claims 1 to 5 wherein the control signal output by the evaluation unit (180) to regulate the amplifying input stage (110) is a dynamic control signal.

7. The mobile high frequency receiver according to any of claims 1 to 6 further comprising:
a tunable amplifier (160) for amplifying the received digital broadcast signal before it is demodulated.

8. The mobile high frequency receiver according to any of claims 1 to 7, wherein the amplifying input stage (110) is tunable to a desired frequency.

9. The mobile high frequency receiver according to any of claims 1 to 8, wherein the evaluation unit (180) is adapted to output a control signal to the digital signal processing section (170).

10. The mobile high frequency receiver according to any of claims 1 to 9, wherein the evaluation unit (180) is adapted to output a control signal to the analogue demodulation section (130).

11. A method for receiving a high frequency signal comprising the steps of:
receiving an analogue or digital broadcast signal,
processing a received digital broadcast signal in a digital signal processing section and outputting a first quality information signal, indicating the quality of the received digital broadcast signal;
processing a received analogue broadcast signal in an analogue signal processing section and outputting a second quality information signal, indicating the quality of the received analogue broadcast signal;
detecting an amplitude of the received analogue and digital broadcast signal in a broadband level detector and outputting a first automatic gain control signal depending on said amplitude
evaluating at least one of said first and second quality information signal in an evaluation unit and outputting a control signal based on either the first or second quality information signal and said first automatic gain control signal (AGC1) to regulate the amplification of an amplifying input stage.

12. The method according to claim 11 further comprising the step of:
outputting a second automatic gain control signal from the digital signal processing section.

13. The method according to claim 11 or 12 further comprising the step of:
demodulating the analogue broadcast signal in an analogue demodulation section and outputting a third automatic gain control signal.

14. The method according to claim 12 and 13 further comprising the further step of:
evaluating the second automatic gain control signal and the third automatic gain control signal and outputting a control signal to regulate the amplifying input stage based on the second or third automatic gain control signal.

15. The method according to any of claims 11 to 14 further comprising the step of:
amplifying the received digital broadcast signal before it is demodulated.

## Patentansprüche

1. Mobiler Hochfrequenzempfänger, umfassend:
eine Verstärkungseingangsstufe (110) zum Empfangen eines Analog- oder Digitalrundfunksignals;
einen Digitalsignalverarbeitungsabschnitt (170) zum Verarbeiten eines empfangenen Digitalrundfunksignals und Ausgeben eines ersten Qualitätsinformationssignals (Q1) zur Angabe der Qualität des empfangenen Digitalrundfunksignals;
einen Analogsignalverarbeitungsabschnitt (140) zum Verarbeiten eines empfangenen Analogrundfunksignals und Ausgeben eines zweiten Qualitätsinformationssignals (Q2) zur Angabe der Qualität des empfangenen Analogrundfunksignals;
einen Breitbandpegeldetektor (120) zum Erfassen einer Amplitude des empfangenen Analog- und Digitalrundfunksignals und Ausgeben eines ersten automatischen Verstärkungssteuersignals (AGC1) in Abhängigkeit von der Amplitude;
eine Bewertungseinheit (180) zum Bewerten von wenigstens einem von dem ersten und zweiten Qualitätsinformationssignal und Ausgeben eines Steuersignals auf Grundlage entweder des ersten oder zweiten Qualitätsinformationssignals und des ersten automatischen Verstärkungssteuersignals (AGC1) zur Regulierung der Verstärkung der Verstärkungseingangsstufe (110).

2. Mobiler Hochfrequenzempfänger nach Anspruch 1, wobei
der Digitalsignalverarbeitungsabschnitt (170) ausgelegt ist zum Ausgeben eines zweiten automatischen Verstärkungssteuersignals (AGC2).

3. Mobiler Hochfrequenzempfänger nach Anspruch 1 oder 2, des Weiteren umfassend:
einen Analogdemodulationsabschnitt (130) zum Demodulieren des Analogrundfunksignals und Ausgeben eines dritten automatischen Verstärkungssteuersignals (AGC3).

4. Mobiler Hochfrequenzempfänger nach Anspruch 2 und 3, wobei die Bewertungseinheit (180) ausgelegt ist zum weiteren Bewerten des zweiten automatischen Verstärkungssteuersignals (AGC2) und des dritten automatischen Verstärkungssteuersignals (AGC3) und Ausgeben des Steuersignals zur Regulierung der Verstärkungseingangsstufe (110) auf Grundlage des zweiten oder dritten automatischen Verstärkungssteuersignals.

5. Mobiler Hochfrequenzempfänger nach einem der Ansprüche 1 bis 4, wobei das von der Bewertungseinheit (180) zur Regulierung der Verstärkungseingangsstufe (110) ausgegebene Steuersignal ein Steuersignal mit veränderlichem Pegel ist.

6. Mobiler Hochfrequenzempfänger nach einem der Ansprüche 1 bis 5, wobei das von der Bewertungseinheit (180) zur Regulierung der Verstärkungseingangsstufe (110) ausgegebene Steuersignal ein dynamisches Steuersignal ist.

7. Mobiler Hochfrequenzempfänger nach einem der Ansprüche 1 bis 6, des Weiteren umfassend:
einen abstimmbaren Verstärker (160) zum Verstärken des empfangenen Digitalrundfunksignals vor dessen Demodulierung.

8. Mobiler Hochfrequenzempfänger nach einem der Ansprüche 1 bis 7, wobei die Verstärkungseingangsstufe (110) auf eine gewünschte Frequenz abstimmbar ist.

9. Mobiler Hochfrequenzempfänger nach einem der Ansprüche 1 bis 8, wobei die Bewertungseinheit (180) ausgelegt ist zum Ausgeben eines Steuersignals an den Digitalsignalverarbeitungsabschnitt (170).

10. Mobiler Hochfrequenzempfänger nach einem der Ansprüche 1 bis 9, wobei die Bewertungseinheit (180) ausgelegt ist zum Ausgeben eines Steuersignals an den Analogdemodulationsabschnitt (130).

11. Verfahren zum Empfangen eines Hochfrequenzsignals, umfassend die nachfolgenden Schritte:
Empfangen eines Analog- oder Digitalrundfunksignals;
Verarbeiten eines empfangenen Digitalrundfunksignals in einem Digitalsignalverarbeitungsabschnitt und Ausgeben eines ersten Qualitätsinformationssignals zur Angabe der Qualität des empfangenen Digitalrundfunksignals;
Verarbeiten eines empfangenen Analogrundfunksignals in einem Analogsignalverarbeitungsabschnitt und Ausgeben eines zweiten Qualitätsinformationssignals zur Angabe der Qualität des empfangenen Analogrundfunksignals;
Erfassen einer Amplitude des empfangenen Analog- und Digitalrundfunksignals in einem Breitbandpegeldetektor und Ausgeben eines ersten automatischen Verstärkungssteuersignals in Abhängigkeit von der Amplitude;
Bewerten von wenigstens einem von dem ersten und zweiten Qualitätsinformationssignal in einer Bewertungseinheit und Ausgeben eines Steuersignals auf Grundlage entweder des ersten oder zweiten Qualitätsinformationssignals und des ersten automatischen Verstärkungssteuersignals (AGC1) zur Regulierung der Verstärkung einer Verstärkungseingangsstufe.

12. Verfahren nach Anspruch 11, des Weiteren umfassend den nachfolgenden Schritt:
Ausgeben eines zweiten automatischen Verstärkungssteuersignals von dem Digitalsignalverarbeitungsabschnitt.

13. Verfahren nach Anspruch 11 oder 12, des Weiteren umfassend den nachfolgenden Schritt:
Demodulieren des Analogrundfunksignals in einem Analogdemodulationsabschnitt und Ausgeben eines dritten automatischen Verstärkungssteuersignals.

14. Verfahren nach Anspruch 12 und 13, des Weiteren umfassend den nachfolgenden weiteren Schritt:
Bewerten des zweiten automatischen Verstärkungssteuersignals und des dritten automatischen Verstärkungssteuersignals und Ausgeben eines Steuersignals zur Regulierung der Verstärkungseingangsstufe auf Grundlage des zweiten oder dritten automatischen Verstärkungssteuersignals.

15. Verfahren nach einem der Ansprüche 11 bis 14, des Weiteren umfassend den nachfolgenden Schritt:
Verstärken des empfangenen Digitalrundfunksignals vor dessen Demodulierung.

## Revendications

1. Récepteur mobile haute fréquence comprenant :
un étage d'entrée d'amplification (110) permettant de recevoir un signal analogique ou numérique de radiodiffusion,
une section de traitement de signal numérique (170) permettant de traiter un signal numérique de radiodiffusion reçu et de fournir en sortie un premier signal d'information sur la qualité (Q1) indiquant la qualité du signal numérique de radiodiffusion reçu,
une section de traitement de signal analogique (140) permettant de traiter un signal analogique de radiodiffusion reçu et de fournir en sortie un second signal d'information sur la qualité (Q2) indiquant la qualité du signal analogique de radiodiffusion reçu
un détecteur de niveau à large bande (120) permettant de détecter l'amplitude du signal analogique et numérique de radiodiffusion reçu et de fournir en sortie un premier signal de commande de gain automatique (ACG1) dépendant de ladite amplitude,
une unité d'évaluation (180) permettant d'évaluer au moins l'un dudit premier et dudit second signal d'information sur la qualité et de fournir en sortie un signal de commande fondé sur l'un ou l'autre du premier ou du second signal d'information sur la qualité et dudit premier signal de commande de gain automatique (ACG1) afin de réguler l'amplification dudit étage d'entrée d'amplification (110).

2. Récepteur mobile haute fréquence selon la revendication 1, dans lequel
la section de traitement de signal numérique (170) est conçue pour fournir en sortie un deuxième signal de commande de gain automatique (ACG2).

3. Récepteur mobile haute fréquence selon la revendication 1 ou 2, comprenant en outre :
une section de démodulation analogique (130) permettant de démoduler le signal analogique de radiodiffusion et de fournir en sortie un troisième signal de commande de gain automatique (ACG3).

4. Récepteur mobile haute fréquence selon l'une des revendications 2 et 3, dans lequel l'unité d'évaluation (180) est conçue pour évaluer de plus le deuxième signal de commande de gain automatique (ACG2) et le troisième signal de commande de gain automatique (ACG3) et pour fournir le signal de commande afin de réguler ledit étage d'entrée d'amplification (110) sur la base du deuxième ou du troisième signal de commande de gain automatique.

5. Récepteur mobile haute fréquence selon l'une quelconque des revendications 1 à 4, dans lequel le signal de commande fourni en sortie par l'unité d'évaluation (180) afin de réguler l'étage d'entrée d'amplification (110) est un signal de commande de niveau variable.

6. Récepteur mobile haute fréquence selon l'une quelconque des revendications 1 à 5, dans lequel le signal de commande fourni en sortie par l'unité d'évaluation (180) afin de réguler l'étage d'entrée d'amplification (110) est un signal de commande dynamique.

7. Récepteur mobile haute fréquence selon l'une quelconque des revendications 1 à 6, comprenant en outre :
un amplificateur pouvant être syntonisé (160) permettant d'amplifier le signal numérique de radiodiffusion reçu avant qu'il soit démodulé.

8. Récepteur mobile haute fréquence selon l'une quelconque des revendications 1 à 7, dans lequel l'étage d'entrée d'amplification (110) peut être syntonisé à une fréquence souhaitée.

9. Récepteur mobile haute fréquence selon l'une quelconque des revendications 1 à 8, dans lequel l'unité d'évaluation (180) est conçue pour fournir en sortie un signal de commande à la section de traitement de signal numérique (170).

10. Récepteur mobile haute fréquence selon l'une quelconque des revendications 1 à 9, dans lequel l'unité d'évaluation (180) est conçue pour fournir en sortie un signal de commande à la section de démodulation de signal analogique (130).

11. Procédé permettant de recevoir un signal haute fréquence comprenant des étapes consistant à :
recevoir un signal analogique ou numérique de radiodiffusion,
traiter un signal numérique de radiodiffusion reçu dans une section de traitement de signal numérique et fournir en sortie un premier signal d'information sur la qualité indiquant la qualité du signal numérique de radiodiffusion reçu,
traiter un signal analogique reçu de radiodiffusion dans une section de traitement de signal analogique et fournir en sortie un second signal d'information de qualité indiquant la qualité du signal analogique de radiodiffusion reçu,
détecter l'amplitude du signal analogique et numérique de radiodiffusion reçu dans un détecteur de niveau à large bande et fournir en sortie un premier signal de commande de gain automatique dépendant de ladite amplitude,
évaluer au moins l'un dudit premier et dudit second signal d'information sur la qualité dans une unité d'évaluation et fournir en sortie un signal de commande fondé sur l'un ou l'autre du premier ou du second signal d'information sur la qualité et dudit premier signal de commande de gain automatique (ACG1) afin de réguler l'amplification d'un étage d'entrée d'amplification (110).

12. Procédé selon la revendication 11, comprenant l'étape consistant à :
fournir en sortie un deuxième signal de commande de gain automatique issu de la section de traitement de signal numérique.

13. Procédé selon la revendication 11 ou 12, comprenant en outre l'étape consistant à :
démoduler le signal analogique de radiodiffusion dans une section de démodulation analogique et fournir en sortie un troisième signal de commande de gain.

14. Procédé selon l'une des revendications 12 et 13, comprenant en outre l'étape supplémentaire consistant à :
évaluer le deuxième signal de commande de gain automatique et le troisième signal de commande de gain automatique et fournir en sortie un signal de commande afin de réguler l'étage d'entrée d'amplification sur la base du deuxième ou du troisième signal de commande de gain automatique.

15. Procédé selon l'une quelconque des revendications 11 à 14, comprenant en outre l'étape consistant à :
amplifier le signal numérique de radiodiffusion reçu avant qu'il soit démodulé.
